# FASCICULE DE BREVET EUROPEEN

(11) **EP 2 078 646 B1**
(45) Date de publication et mention de la délivrance du brevet: **30.06.2010**
(21) Numéro de dépôt: 09150063.7
(22) Date de dépôt: 05.01.2009
(51) Int. Cl.: B60R 22/22, B60R 21/02, B60R 21/06

(54) **Dispositif destiné à l'attache d'une extrémité d'une ceinture de sécurité et à l'arrimage d'un équipement de retenue de charge dans un habitacle de véhicule automobile**
Vorrichtung zur Befestigung eines Endes eines Sicherheitsgurtes und eine Lastrückhalteeinrichtung in einem Fahrzeugraum eines Autos
Device for fastening one end of a safety belt and a cargo restraint in a motor vehicle compartment

(30) Priorité: 08.01.2008 FR 0850077
(43) Date de publication de la demande: 15.07.2009
(73) Titulaire: PEUGEOT CITROËN AUTOMOBILES S.A., 78140 Vélizy Villacoublay (FR)
(72) Inventeur: Oudart, Fabrice, 25700 Valentigney (FR)

(56) Documents cités:
- EP-A- 0 640 513
- WO-A-2006/103069
- DE-A1- 19 835 230
- DE-A1-102005 011 453
- DE-C1- 19 634 104
- DE-U1-202004 012 088
- DE-U1-202006 007 474
- US-B1- 6 554 339

## Description

La présente invention est relative aux dispositifs destinés à l'attache d'une extrémité d'une ceinture de sécurité et à l'arrimage d'un équipement de retenue de charge dans un habitacle de véhicule automobile.

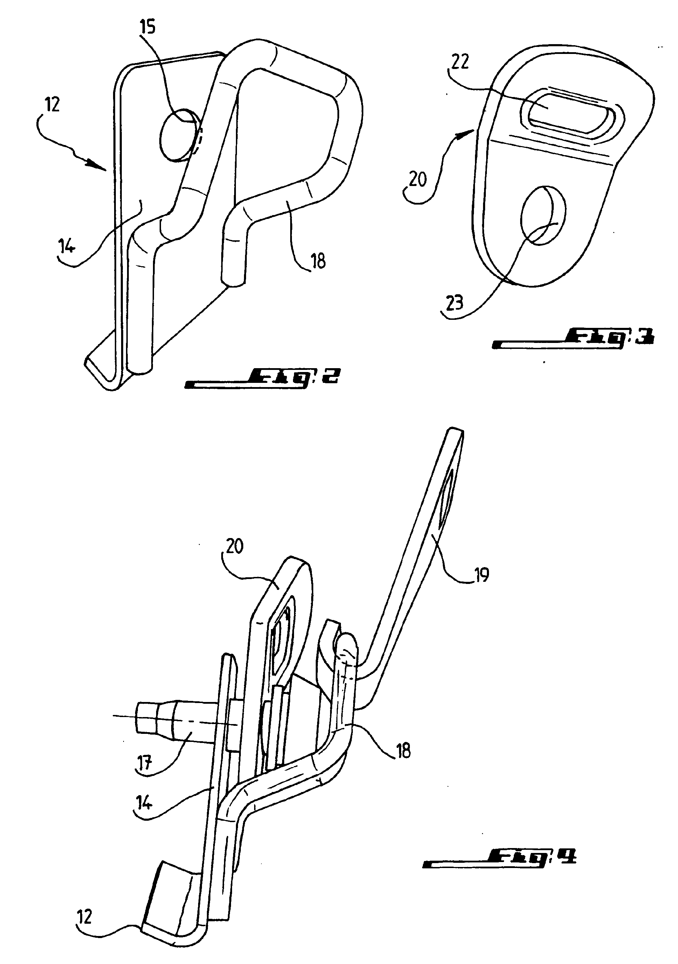

Un tel dispositif est représenté aux figures 2 à 4 et comporte d'une part une première pièce 12 comprenant une platine 14 à perçage 15 de passage de vis 17 de fixation de la platine 14 à la caisse du véhicule et un fil 18 soudé sur la platine pour l'arrimage du mousqueton 19 d'un filet de retenue de charge, et d'autre part une deuxième pièce 20 en forme de patte coudée dont une extrémité comporte une fenêtre 22 de passage d'une boucle d'extrémité d'une sangle de ceinture de sécurité et dont l'extrémité opposée comporte un perçage 23 permettant la fixation de la deuxième pièce 20 à la première pièce 12 par l'intermédiaire de la vis de fixation 17 de la première pièce 12 à la caisse du véhicule.

Ce dispositif connu a pour inconvénient d'être peu commode à assembler à la caisse du véhicule dans l'habitacle. En effet, un opérateur doit aligner les deux perçages 15, 23 des deux pièces 12, 20 en regard d'un trou taraudé de la caisse pour permettre le passage de la vis de fixation 17 afin d'assembler les pièces 12, 20 à la caisse. Ce montage est rendu d'autant plus fastidieux que l'opérateur doit en plus utiliser une visseuse d'ancrage de la vis 17 à la caisse au travers des deux perçages 15, 23 des deux pièces 12, 20. Un tel montage est en outre pénalisant du point de vue temps de fabrication.

La présente invention a notamment pour but de remédier aux inconvénients des dispositifs de l'art antérieur.

A cet effet, selon l'invention a pour objet un dispositif destiné à l'attache d'une extrémité d'une ceinture de sécurité et à l'arrimage d'un équipement de retenue de charge dans un habitacle de véhicule automobile, caractérisé en ce qu'il comprend une seule pièce d'attache ayant une partie de fixation permettant la fixation de la pièce dans l'habitacle, une partie d'attache de l'extrémité de la ceinture de sécurité et une partie d'arrimage de l'équipement de retenue de charge.

Dans divers modes de réalisation du dispositif selon l'invention, on peut éventuellement avoir recours en outre à l'une et/ou à l'autre des dispositions suivantes :
- la partie de fixation de la pièce et la partie d'attache de la ceinture de sécurité appartiennent à une même plaque ;
- la partie de fixation de la pièce dans l'habitacle comporte un perçage de passage d'une vis de fixation de la pièce à la caisse du véhicule ;
- la partie d'attache comporte une fenêtre de passage d'une boucle d'extrémité de la ceinture de sécurité ;
- la partie de fixation de la pièce et la partie d'attache de ceinture de sécurité sont situées à des extrémités opposées de la pièce ;
- la partie d'arrimage comprend un fil plié sensiblement en forme de U constituant une boucle d'arrimage solidaire par soudage de la plaque ;
- la boucle d'arrimage est latéralement décalée relativement à la partie d'attache en étant approximativement en regard de cette dernière.

Par ailleurs, l'invention a également pour objet un véhicule automobile comportant un habitacle dans lequel est fixé une ceinture de sécurité et équipé d'un équipement de retenue de charge, caractérisé en ce qu'il comporte un dispositif selon l'invention, la ceinture de sécurité étant attachée à la partie d'attache de la pièce et l'équipement de retenue de charge étant arrimé à la partie d'arrimage de la pièce.

Dans le véhicule, l'équipement de retenue de charge peut être un filet de retenue de charge haute qui comporte au moins une sangle d'arrimage.

Avantageusement, le dispositif selon l'invention est fixé dans l'habitacle en partie inférieure d'un pied milieu de la caisse du véhicule.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue en perspective d'un dispositif selon l'invention monté dans un véhicule ;
- les figures 2 et 3 sont des vues en perspective de pièces d'un dispositif selon l'état de la technique ;
- la figure 4 est une vue en perspective des pièces du dispositif des figures 2 et 3 telles qu'assemblées dans un véhicule ;
- la figure 5 est une vue en perspective agrandie du dispositif de l'invention correspondant au cercle V de la figure 1 ;
- la figure 6 est une vue en perspective du dispositif selon l'invention.

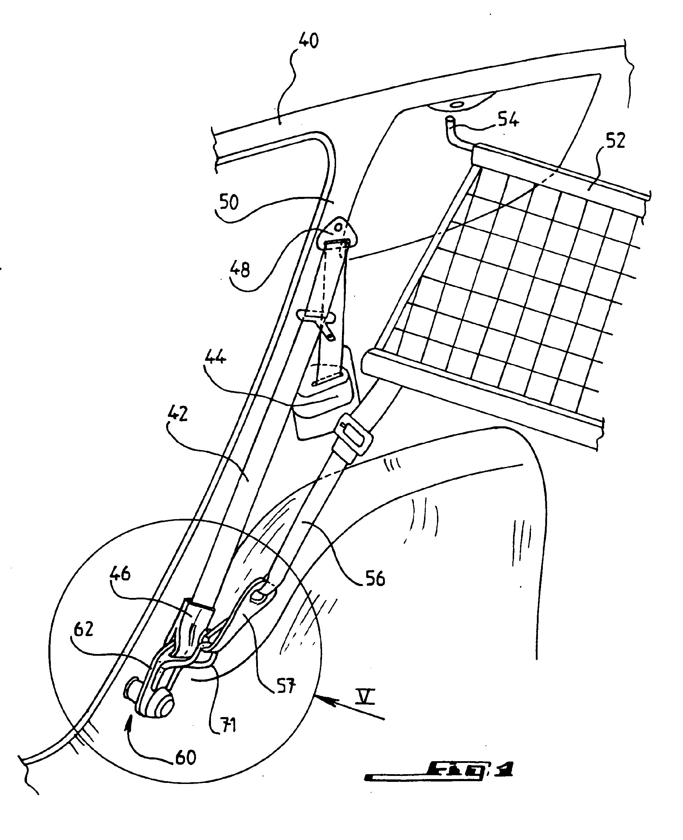

Traditionnellement, un véhicule comporte une caisse 40 (figure 1) délimitant un habitacle comprenant d'une part un espace réservé pour au moins un passager assis sur un siège en étant retenu par une ceinture de sécurité 42 et d'autre part un compartiment arrière à bagages.

La ceinture 42 est fixée à la caisse 40 à une première extrémité par l'intermédiaire d'un enrouleur 44, à une seconde extrémité 46 à un dispositif d'attache inférieur et sur une portion intermédiaire à un dispositif d'ancrage supérieur 48 servant de renvoi de sangle sur un montant vertical 50 formant un pied milieu de la caisse 40.

Pour éviter que des charges telles que des sacs empilés dans le compartiment à bagages soient projetés par dessus les sièges dans l'espace réservé aux passagers par exemple lors d'un freinage, un filet de retenue de charge haute 52 peut être installé. Pour être lié à la caisse 40, un tel filet 52 comporte un bras d'accrochage supérieur 54 et deux sangle latérales d'arrimage inférieur 56 se terminant chacune par un mousqueton 57.

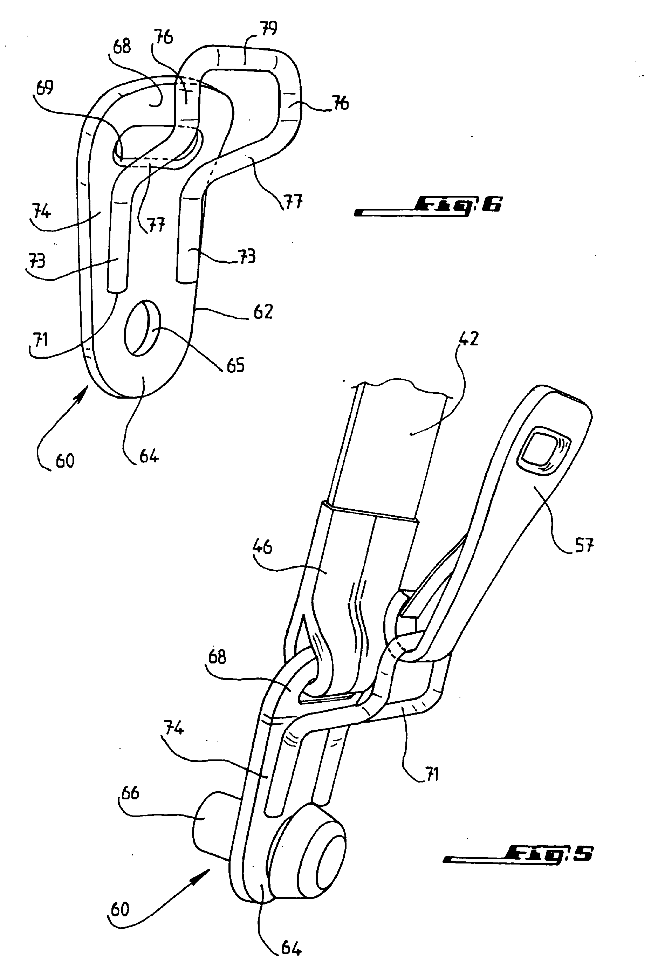

Le dispositif de l'invention, comme cela ressort des figures 1, 5 et 6, est constitué par une pièce unique 60 permettant d'une part l'attache de la seconde extrémité 46 en forme de boucle de la ceinture de sécurité 42 et d'autre part l'arrimage du mousqueton 57 de la sangle 56 du filet 52.

La pièce 60 du dispositif de l'invention comporte une plaque rigide 62 dont une partie d'extrémité inférieure 64 est plane et délimite un perçage 65 de passage d'une vis de fixation 66 de la pièce 60 à l'extrémité inférieure du pied milieu 50 et dont une partie d'extrémité supérieure 68 délimite une fenêtre oblongue 69 de passage de boucle d'extrémité 46 de la ceinture de sécurité 42. La partie d'extrémité supérieure 68 est coudée latéralement par rapport à la partie plane de fixation 64 de la plaque 62.

La pièce 60 du dispositif d'attache comprend en outre un fil rigide 71 qui est plié approximativement en forme de U dont les deux branches rectilignes parallèles ont leur tronçon d'extrémité inférieure 73 fixé par exemple par soudage à une partie intermédiaire 74 de la plaque 62, la partie intermédiaire 74 étant située entre le perçage 65 et la fenêtre 69 et formant avec le fil 71 partie d'arrimage de la plaque.

Le fil plié 71 en U est cintré de façon que la tête du U fasse saillie de la plaque 62 en étant située approximativement en regard de la partie d'extrémité supérieure 68 formant partie d'attache de boucle d'extrémité de ceinture.

A cet effet, les branches parallèles 76 de la tête du U du fil 71 sont raccordées aux tronçons d'extrémité inférieure 73 par l'intermédiaire de tronçons inclinés 77 saillants relativement à la plaque 62 de façon que les branches parallèles 76 de la tête du U et un tronçon d'arrimage 79 fermant le U soient situés dans un plan sensiblement parallèle au plan de la plaque 62.

Sur la chaîne de montage, la fixation de la pièce 60 sur la caisse du véhicule dans l'habitacle s'effectue tout simplement comme suit.

Un opérateur saisit la pièce 60, à la partie supérieure de laquelle a été préalablement attachée la boucle d'extrémité 46 de la ceinture de sécurité 42, pour présenter le perçage 65 en regard du trou taraudé correspondant en partie inférieure du pied milieu 50. Ensuite, l'opérateur introduit la vis de fixation 66 au travers du perçage 65 pour l'ancrer à l'aide d'une visseuse dans le trou taraudé et fixer la pièce 60 au pied milieu 50.

Le montage de la pièce 60 du dispositif d'attache de l'invention est ainsi extrêmement simple et rapide. En outre, le dispositif de l'invention est moins coûteux relativement au dispositif connu des figures 2 à 4 puisqu'il nécessite une seule pièce au lieu de deux.

## Revendications

1. Dispositif destiné à l'attache d'une extrémité (46) d'une ceinture de sécurité (42) et à l'arrimage d'un équipement de retenue de charge (52, 57) dans un habitacle de véhicule automobile, **caractérisé en ce qu'**il comprend une seule pièce d'attache (60) ayant une partie de fixation (64) permettant la fixation de la pièce (60) dans l'habitacle, une partie d'attache (68) de l'extrémité (46) de la ceinture de sécurité (42) et une partie d'arrimage (74, 71) de l'équipement (52, 57) de retenue de charge.

2. Dispositif selon la revendication 1, **caractérisé en ce que** la partie de fixation (64) de la pièce (60) et la partie d'attache (68) de la ceinture de sécurité (42) appartiennent à une même plaque (62).

3. Dispositif selon l'une quelconque des revendications précédentes, **caractérisé en ce que** la partie de fixation (64) de la pièce (60) dans l'habitacle comporte un perçage (65) de passage d'une vis de fixation (66) de la pièce (60) à la caisse du véhicule et **en ce que** la partie d'attache (68) comporte une fenêtre (69) de passage d'une boucle d'extrémité (46) de la ceinture de sécurité (42).

4. Dispositif selon l'une quelconque des revendications précédentes, **caractérisé en ce que** la partie de fixation (64) de la pièce (60) et la partie d'attache (68) de ceinture de sécurité (42) sont situées à des extrémités opposées de la pièce (60).

5. Dispositif selon l'une quelconque des revendications 2 à 4, **caractérisé en ce que** la partie d'arrimage (74, 71) comprend un fil plié (71) sensiblement en forme de U constituant une boucle d'arrimage (76, 79) solidaire par soudage de la plaque (62).

6. Dispositif selon la revendication 5, **caractérisé en ce que** la boucle d'arrimage (76, 79) est latéralement décalée relativement à la partie d'attache (68) en étant approximativement en regard de cette dernière.

7. Véhicule automobile comportant un habitacle dans lequel est fixé une ceinture de sécurité (42) et équipé d'un équipement de retenue de charge (52, 57), **caractérisé en ce qu'**il comporte un dispositif selon l'une quelconque des revendications 1 à 6, la ceinture de sécurité (42) étant attachée à la partie d'attache (68) de la pièce (60) et l'équipement de retenue de charge (52, 57) étant arrimé à la partie d'arrimage de la pièce (74, 71).

8. Véhicule selon la revendication précédente, **caractérisé en ce que** l'équipement de retenue de charge (52, 57) est un filet de retenue de charge haute qui comporte au moins une sangle d'arrimage (56).

9. Véhicule selon l'une quelconque des revendications 7 à 8, **caractérisé en ce que** le dispositif est fixé dans l'habitacle en partie inférieure d'un pied milieu (50) de la caisse du véhicule.

## Claims

1. Device intended for securing one end (46) of a safety belt (42) and for anchoring a cargo restraint (52, 57) in a motor vehicle passenger compartment, **characterized in that** it comprises a single securing piece (60) having an attachment part (64) that allows the piece (60) to be attached in the passenger compartment, a securing part (68) for securing the end (46) of the safety belt (42), and an anchoring part (74, 71) for anchoring the cargo restraint (52, 57).

2. Device according to Claim 1, **characterized in that** the attachment part (64) of the piece (60) and the securing part (68) for securing the safety belt (42) form part of one and the same plate (62).

3. Device according to either one of the preceding claims, **characterized in that** the attachment part (64) for attaching the piece (60) into the passenger compartment has a passage hole (65) an attaching screw (66) that attaches the piece (60) to the body shell of the vehicle, and **in that** the securing part (68) comprises an opening (69) through which an end loop (46) of the safety belt (42) passes.

4. Device according to any one of the preceding claims, **characterized in that** the attachment part (64) of the piece (60) and the securing part (68) for securing the safety belt (42) are situated at opposite ends of the piece (60).

5. Device according to any one of Claims 2 to 4, **characterized in that** the anchoring part 974, 71) comprises a wire (71) bent substantially into the shape of a U constituting an anchoring loop (76, 79) welded t the plate (62).

6. Device according to Claim 5, **characterized in that** the anchoring loop (76, 79) is laterally offset in relation to the securing part (68), and lies approximately facing the latter.

7. Motor vehicle comprising a passenger compartment in which there is attached a safety belt (42) and which is fitted with a cargo restraint (52, 57), **characterized in that** it comprises a device according to any one of Claims 1 to 6, the safety belt (42) being secured to the attachment part (68) of the piece (60) and the cargo restraint (52, 57) being anchored to the anchoring part of the piece (74, 71).

8. Vehicle according to the preceding claim, **characterized in that** the cargo restraint (52, 57) is a high-level cargo-restraining net which comprises at least one anchoring strap (56).

9. Vehicle according to either one of Claims 7 to 8, **characterized in that** the device is attached in the passenger compartment at the bottom of a vehicle body shell centre pillar (50).

## Patentansprüche

1. Vorrichtung zum Befestigen eines Endes (46) eines Sicherheitsgurtes (42) und zum Sichern einer Lastrückhalteeinrichtung (52, 57) in einem Innenraum eines Kraftfahrzeugs, **dadurch gekennzeichnet, dass** sie ein einziges Befestigungsstück (60) mit einem Halterungsteil (64), der das Anbringen des Stücks (60) in dem Innenraum gestattet, einen Teil (68) zur Befestigung des Endes (46) des Sicherheitsgurts (42) und einen Teil (74, 71) zum Sichern der Lastrückhalteeinrichtung (52, 57) umfasst.

2. Vorrichtung nach Anspruch 1, **dadurch gekennzeichnet, dass** der Teil (64) zum Anbringen des Stücks (60) und der Teil (68) zur Befestigung des Sicherheitsgurtes (42) zu einer gleichen Platte (62) gehören.

3. Vorrichtung nach einem der vorhergehenden Ansprüche, **dadurch gekennzeichnet, dass** der Teil (64) zum Anbringen des Stücks (60) in dem Innenraum eine Bohrung (65) zum Hindurchstecken einer Befestigungsschraube (66) zum Anbringen des Stücks (60) an der Karosserie des Fahrzeugs aufweist und dass der Befestigungsteil (68) ein Fenster (69) zum Hindurchführen einer Endschnalle (46) des Sicherheitsgurtes (42) aufweist.

4. Vorrichtung nach einem der vorhergehenden Ansprüche, **dadurch gekennzeichnet, dass** sich der Teil (64) zum Anbringen des Stücks (60) und der Teil (68) zur Befestigung des Sicherheitsgurtes (42) an einander gegenüberliegenden Enden des Stücks (60) befinden.

5. Vorrichtung nach einem der Ansprüche 2 bis 4, **dadurch gekennzeichnet, dass** der Sicherungsteil (74, 71) einen im Wesentlichen U-förmigen gebogenen Draht (71) umfasst, der eine durch Schweißen fest mit der Platte (62) verbundene Sicherungsschnalle (76, 79) bildet.

6. Vorrichtung nach Anspruch 5, **dadurch gekennzeichnet, dass** die Sicherungsschnalle (76, 79) bezüglich des Befestigungsteils (64) lateral versetzt ist, indem er sich ungefähr gegenüber dieser letzteren befindet.

7. Kraftfahrzeug mit einem Innenraum, in dem ein Sicherheitsgurt (42) befestigt ist und der mit einer Lastrückhalteeinrichtung (52, 57) versehen ist, **dadurch gekennzeichnet, dass** es eine Vorrichtung nach einem der Ansprüche 1 bis 6 aufweist, wobei der Sicherheitsgurt (42) an dem Teil (68) zur Befestigung des Stücks (60) befestigt ist und die Lastrückhalteeinrichtung (52, 57) an dem Teil zum Sichern des Stücks (74, 71) gesichert ist.

8. Fahrzeug nach dem vorhergehenden Anspruch, **dadurch gekennzeichnet, dass** die Lastrückhalteeinrichtung (52, 57) ein Schwerlastrückhaltenetz ist, das mindestens einen Zurrgurt (56) umfasst.

9. Fahrzeug nach einem der Ansprüche 7 bis 8, **dadurch gekennzeichnet, dass** die Vorrichtung in dem Innenraum teilweise unter einer Mittelsäule (50) der Karosserie des Fahrzeugs angebracht ist.
